# EUROPÄISCHE PATENTANMELDUNG

(11) **EP 4 778 397 A1**
(43) Veröffentlichungstag der Anmeldung: **22.07.2026**
(21) Anmeldenummer: 25151976.5
(22) Anmeldetag: 15.01.2025
(51) Int. Cl.: A23F 5/44

(54) **KAFFEEERSATZPULVER**

(71) Anmelder: CUPERIOR GmbH, 1010 Wien (AT)
(72) Erfinder: HAMMER-PURGSTALL-BERND, Felix, 5360 St. Wolfgang (AT); FUCHSHUBER, Sebastian Gerhard, 4040 Linz (AT); SCHMIDTGRABMER, Wolfgang, 4064 Pasching (AT); TSCHERNAY, Philipp, 4060 Leonding (AT)
(74) Vertreter: SONN Patentanwälte GmbH & Co KG

(57) **Zusammenfassung**

Die Erfindung betrifft ein Kaffeeersatzpulver, vorzugsweise auf Zichorienbasis, für die Herstellung von Kaffeeersatzgetränken in Kaffeemaschinen, zumindest aufweisend ein wasserlösliches, vorzugsweise geschmacksbildendes, Extrakt und einen im Wesentlichen geschmacksneutralen Füll- oder Trennstoff, gekennzeichnet dadurch, dass der Extrakt und der Füll- oder Trennstoff pulverförmig sind, sowie ein korrespondierendes Kaffeeersatzgetränk und ein korrespondierendes Verfahren zur Herstellung eines entsprechenden Kaffeeersatzgetränks.

## Beschreibung

Die Erfindung betrifft ein Kaffeeersatzpulver, vorzugsweise auf Zichorienbasis, für die Herstellung von Kaffeeersatzgetränken in Kaffeemaschinen, zumindest aufweisend ein wasserlösliches, vorzugsweise geschmacksbildendes, Extrakt und einen im Wesentlichen geschmacksneutralen Füll- oder Trennstoff, gekennzeichnet dadurch, dass der Extrakt und der Füll- oder Trennstoff pulverförmig sind, sowie ein korrespondierendes Kaffeeersatzgetränk und ein korrespondierendes Verfahren zur Herstellung eines Kaffeeersatzgetränks.

Kaffeegetränke zeichnen sich insbesondere durch ihre Herstellungsweise bzw. die dafür herangezogenen Herstellungsmittel (Kaffeemaschinen) aus. Die Kombination aus Kaffeemaschine und Beschaffenheit der gemahlenen Kaffeebohnen bestimmt dabei wesentlich die Ausprägung des Kaffeegetränks. Unterschieden wird beispielsweise Espresso aus einer Druckbrühmaschine, insbesondere einer Siebträgermaschine und Standardkaffee aus einer Druckbrüh- oder Filterkaffeemaschine.

Als Alternative zu Kaffeegetränken sind Kaffeeersatzgetränke bekannt. Üblicherweise werden diese aus Kaffeeersatzpulver auf pflanzlicher Basis hergestellt. Als solche ist insbesondere die Wurzel der Zichorie bekannt. Dabei wird die Zichorienwurzel zerkleinert und geröstet, anschließend gegebenenfalls gemahlen und/oder zu einem Extrakt weiterverarbeitet.

Es ist bekannt einen granulären Füllstoff in einem pflanzlichen Extrakt zu tränken (Flüssigprozess), um ein maschinengängiges, daher für die Herstellung von Kaffeeersatzgetränken in gängigen Kaffeemaschinen geeignetes, Kaffeeersatzpulver herzustellen. Die US 2024/0251832 A1 offenbart ein solches, unter anderem auf Zichorienextrakt basierendes Kaffeeersatzpulver.

Eine präzise Regelung der in den Füllstoff eingebrachten Menge des Extraktes, d.h. des Mischverhältnisses zwischen Extrakt und Füllstoff, das maßgeblich für die Beschaffenheit des Kaffeeersatzgetränks ist, zu erreichen ist schwierig.

Überdies bedarf es der Verheiratung von Extrakt und Füllstoff nachgelagerter Prozessschritte, insbesondere eines Trocknungsprozesses. Im Zuge des Tränk- und/oder Trocknungsprozesses können beispielsweise als Gravitationsinduzierte oder anderweitig induzierte Agglomeration des Extraktes ausgeprägte Inhomogenitäten im Kaffeeersatzpulver entstehen. Diese können den Druckaufbau im Brühkopf einer Druckbrühmaschine behindern und die Ausbeute des Herstellungsprozess beeinflussen. Die Reproduzierbarkeit der gewünschten Beschaffenheit des Kaffeeersatzgetränks sinkt. Der Stand der Technik zielt mitunter darauf ab, das Kaffeeersatzpulver abschließend zu instantisieren, um die Löslichkeit in Wasser zu erhöhen, die Vermeidung von Inhomogenitäten ist folglich kein Hauptaugenmerk.

Es ist daher Aufgabe der Erfindung ein verbessertes, maschinengängiges, insbesondere für Filtermaschinen und Druckbrüh- bzw. Siebträgermaschinen geeignetes Kaffeeersatzpulver zu schaffen.

Diese Aufgabe wird durch ein Kaffeeersatzpulver, vorzugsweise auf Zichorienbasis, für die Herstellung von Kaffeeersatzgetränken in Kaffeemaschinen, zumindest aufweisend ein wasserlösliches, vorzugsweise geschmacksbildendes, Extrakt und einen im Wesentlichen geschmacksneutralen Füll- und Trennstoff, dadurch gelöst, dass der Extrakt und der Füll- und Trennstoff pulverförmig sind. Bevorzugt ist der Extrakt und/oder der Füll- oder Trennstoff pflanzlichen Ursprungs. Bevorzugt wird der pulverförmige Extrakt durch Trocknung, insbesondere Sprühtrocknung, eines flüssigen Extraktes hergestellt. Bevorzugt ist die Körnung des Füll- und Trennstoffs größer als jene des Extraktes. Bevorzugt entspringt der Füll- oder Trennstoff einem Recycling-Prozess. Vorzugsweise ist das Kaffeeersatzpulver eine Mischung aus zumindest zwei Pulvern unterschiedlicher Partikelgrößenverteilungen und/oder Löslichkeit und/oder unterschiedlichen Materials.

Durch die Trocknung, insbesondere Sprühtrocknung, des Extraktes vor der Verheiratung mit dem Füllstoff wird der Herstellungsprozess zeitlich und räumlich entkoppelbar und effizienter, sowie besser standardisier- bzw. regulierbar. Beim im Stand der Technik beschriebenen Flüssigprozess, beispielsweise in Form von Abtropfung, auftretende Extraktverluste werden vermieden, die in den Füllstoff eingebrachte Menge des Extraktes kann somit genauer reguliert werden. Das Mischverhältnis zwischen Extrakt und Füllstoff kann nicht nur genauer bestimmt, sondern auch einfacher adjustiert (verändert) werden: Der Flüssigprozess kann, insbesondere bei sehr geringen Mengen einzubringendem Extrakt, Maßnahmen zur Gewährleistung von homogener Verteilung des Extrakts im Füllstoff, beispielsweise durch Verdünnung des Extraktes, erfordern. Dadurch veränderte Agglomerations- und Trocknungseigenschaften des Extrakts erfordern mitunter eine Neukalibrierung der der Verheiratung nachgelagerten Prozesse, insbesondere des Trocknungsprozesses. Andererseits führt auch die Einbringung von besonders großen Mengen Extrakt zu Schwierigkeiten hinsichtlich der Aufnahmefähigkeit des Füllstoffs.

Im Zuge des Trockenprozesses der gegenständlichen Erfindung tritt der Füllstoff auch als Trennstoff auf. Die vorzugsweise gröber gekörnten Partikel des Füll- und Trennstoffs vermindern den Kontakt zwischen den Partikeln des Extraktes. Gegenüber dem Stand der Technik ist das Verhältnis des Körnungsgrade von Extrakt und Füll- und Trennstoff regulierbar. Vorzugsweise, kann auch die Körnung des pulverförmigen Extraktes (beliebig) gewählt werden. Von Vorteil ist die gegenüber dem Stand der Technik, über verschiedenste Mischverhältnisse (Extrakt zu Füll- und Trennstoff) hinweg, verbesserte Homogenität des Kaffeeersatzpulvers. Eine Klumpenbildung des Kaffeeersatzpulvers während der Herstellung des Kaffeeersatzgetränks wird folglich vermindert und die Verklebung des Innenlebens der Kaffeemaschine verhindert. Aufwendige Folgereinigungsarbeiten erübrigen sich. Der Aufbau des während der Zubereitung im Brühkopf einer Druckbrühmaschine vorgesehenen Drucks wird bewerkstelligt, der aufgrund eines durch Agglomeration, Brückenbildung und/oder übermäßiger Ausscheidung des Extraktes bedingten inhomogenen Druckprofils im Brühkopf verhindert werden kann. Die gegenständliche Erfindung ermöglicht vorteilhafterweise ein hinsichtlich Beschaffenheit und Ausbeute reproduzierbares Kaffeeersatzgetränk.

Hinsichtlich des Kaffeeersatzpulvers ist es vorteilhaft, wenn der Füll- oder Trennstoff im Wesentlichen nicht-quellend ist. Bevorzugt ist der Füll- und Trennstoff im Wesentlichen unlöslich. Vorteilhaft ist das resultierende, über den Herstellungsprozess des Kaffeeersatzgetränks hinweg im Wesentlichen konstante, Kaffeeersatzpulvervolumen im Brühkopf einer Kaffeemaschine, insbesondere dadurch, dass die Ein- und Ausgangsöffnungen des Brühkopfs nicht durch quellendes Kaffeeersatzpulver verstopft werden. Es ist vorteilhaft, wenn ein nicht-quellender Füll- und Trennstoff verminderten oder gar ausbleibenden Fluss in und/oder aus und/oder durch den Brühkopf einer Kaffeemaschine, insbesondere einer Druckbrühmaschine, vermeidet.

Hinsichtlich des Kaffeeersatzpulvers ist es vorteilhaft, wenn der Füll- oder Trennstoff aus Marillenendokarp besteht. Vorzugsweise besteht der Füll- oder Trennstoff aus gehackten, zerkleinerten, gebrochenen, geschnittenen, zerschlagenen und/oder vermahlenen Partikeln. Vorzugsweise wird der Füll- und Trennstoff aus einer Messermühle und/oder einer Kaffeemühle gewonnen.

Hinsichtlich des Kaffeeersatzpulvers ist es vorteilhaft, wenn das Kaffeeersatzpulver für die Herstellung von Kaffeeersatzgetränken in Druckbrühmaschinen, insbesondere Siebträgermaschinen, und Filtermaschinen, geeignet ist. Vorzugsweise ist das Kaffeeersatzpulver für Handels- und Gastronomie-übliche Kaffeemaschinen geeignet.

Hinsichtlich des Kaffeeersatzpulvers ist es vorteilhaft, wenn das Kaffeeersatzpulver durch die Vermengung von Extrakt und Füll- oder Trennstoff seine Maschinengängigkeit erreicht. Vorzugsweise ist der Vermengungsprozess als Trockenprozess ausgeprägt, insbesondere als Rühr-, Schüttel-, Vibrations- oder Einblasprozess. Optional können Extrakt und Füll- und Trennstoff "on-site", d.h. direkt vor der Herstellung des Kaffeeersatzgetränks, vermengt werden.

Hinsichtlich des Kaffeeersatzpulvers ist es vorteilhaft, wenn die Rezeptur des Kaffeeersatzpulvers für einen bestimmten Kaffeemaschinentypen durch das Mengenverhältnis von Extrakt und Füll- oder Trennstoff und/oder der Körnung des Füll- oder Trennstoffs adjustiert wird. Vorzugsweise wird die Rezeptur des Kaffeeersatzpulvers für einen bestimmten Kaffeemaschinentypen durch die Körnung des Extraktes adjustiert. Vorzugsweise wird die Rezeptur des Kaffeeersatzpulvers für einen bestimmten Kaffeemaschinentypen hinsichtlich des Fassungsvolumens des Brühkopfs adjustiert. Vorzugsweise ist das Mengenverhältnis als Gewichts- oder Volumensmengenverhältnis ausgeprägt. Optional wird das Mengenverhältnis durch den Benutzer direkt vor der Herstellung des Kaffeeersatzgetränks adjustiert. Die Maschinengängigkeit des Kaffeeersatzpulvers hinsichtlich eines bestimmten Kaffeemaschinentypens ergibt sich vorzugsweise aus der Entsprechung gegenüber für den Einsatz in demselben Kaffeemaschinentypen gemahlenen Bohnen, insbesondere hinsichtlich Quellgrad, Löslichkeit, Partikelgröße, Fließ-/Rieselfähigkeit, Feuchtigkeitsgehalt, Temperaturbeständigkeit, und/oder Filterdurchlässigkeit.

Hinsichtlich des Kaffeeersatzpulvers ist es vorteilhaft, wenn das Mengenverhältnis zwischen Extrakt und Füll- oder Trennstoff ein Teil Extrakt zu 1 - 100 Teilen Füll- oder Trennstoff, vorzugsweise 1:8 - 1:1, beträgt. Bevorzugt ist der aus Extrakt bestehende Mengenanteil des Kaffeeersatzpulvers für die Herstellung eines Standardkaffeeersatzgetränks, vorzugsweise in einer Filterkaffeemaschine, höher als jener für die Herstellung eines Espressoersatzgetränks, vorzugsweise in einer Druckbrühmaschine, insbesondere in einer Siebträgermaschine, besonders bevorzugt um in etwa den Faktor 2 - 4. Vorzugsweise beträgt das Mengenverhältnis im Wesentlichen 5,5:7 für die Herstellung, insbesondere eines Standardkaffeeersatzgetränks, in einer Filterkaffeemaschine bzw. 1,25:5,75 für die Herstellung, insbesondere Espressokaffeeersatzgetränks, in einer Druckbrühmaschine.

Hinsichtlich des Kaffeeersatzpulvers ist es vorteilhaft, wenn die Körnung des Füll- oder Trennstoffs 10 - 3000µm beträgt. Bevorzugt ist die Körnung des Füll- oder Trennstoffs für die Herstellung in einer Filterkaffeemaschine größer als jene für die Herstellung in einer Druckbrühmaschine, besonders bevorzugt um in etwa den Faktor 1,5 - 3,5. Bevorzugt beträgt die Körnung des Füll- oder Trennstoffs für die Verwendung in einer Filterkaffeemaschine 400 - 650µm. Bevorzugt beträgt die Körnung des Füll- oder Trennstoffs für die Verwendung in einer Siebträgermaschine 150 - 250µm.

Hinsichtlich des Kaffeeersatzpulvers ist es vorteilhaft, wenn das Kaffeeersatzpulver außerdem zumindest Malzextrakt, Koffein und/oder Aromen aufweist. Bevorzugt weist das Kaffeeersatzpulver zur Herstellung eines Standardkaffeeersatzgetränks, vorzugsweise in einer Filterkaffeemaschine, einen höheren Koffeinanteil auf, als jenes zur Herstellung eines Espressokaffeeersatzgetränks, vorzugsweise in einer Druckbrühmaschine, besonders bevorzugt um einen Faktor von 1 - 2, beispielsweise im Wesentlichen 1 - 3. Alternativ weist das Kaffeeersatzpulver zur Herstellung eines Standardersatzkaffees im Wesentlichen den gleichen Koffeinanteil auf wie jenes zur Herstellung eines Espressokaffeeersatzgetränks. Vorzugsweise beträgt der aus Koffein bestehende Mengenanteil des Kaffeeersatzpulvers 1 - 20 Promille, beispielsweise im Wesentlichen 9 - 10 Promille zur Herstellung eines Standardkaffeeersatzgetränks und 6 - 8 Promille zur Herstellung von Espressoersatzgetränks. Das Mengenverhältnis von Koffein zu Füll- oder Trennstoff im Kaffeeersatzpulver beträgt vorzugsweise 1:40 - 1:150.

Das korrespondierende Kaffeeersatzgetränk wird aus dem Kaffeeersatzpulver hergestellt. Vorzugsweise wird für die Herstellung in einer Filterkaffeemaschine eine größere Menge Kaffeeersatzpulver herangezogen, als für die Herstellung in einer Druckbrühmaschine, vorzugsweise um in etwa den Faktor 2.

Bei dem korrespondierenden Verfahren zur Herstellung eines Kaffeeersatzgetränks, wird das Kaffeeersatzpulver analog zu gemahlenen Bohnen in eine Kaffeemaschine eingebracht und verwertet. Vorzugsweise wird das Kaffeeersatzpulver in den Siebträger einer Siebträgermaschine eingebracht, dieser wird anschließend der Siebträgermaschine zugeführt. Vorzugsweise wird das Kaffeeersatzpulver in den Brühkopf einer Druckbrüh- oder Filterkaffeemaschine eingebracht. Vorzugsweise durchfließt heißes oder kaltes Wasser und/oder durchströmt Wasserdampf das Kaffeeersatzpulver oder wird alternativ durch dieses gepresst.

Bei einem bevorzugten Ausführungsbeispiel der Erfindung, auf welches die Erfindung keinesfalls eingeschränkt sein soll, ist pulverförmiges Steinobstendokarp als Füll- oder Trennstoff vorgesehen. Steinobstendokarp weist vorteilhafterweise bei Kontakt mit Wasser keine Volumenzunahme durch Aufnahme von Flüssigkeit auf, d.h. es ist nicht-quellend. Das pulverförmige Steinobstendokarp, vorzugsweise Marillenendokarp, weist vorzugsweise eine Körnung von 400 - 650um auf. Mit dieser Körnung kann ein vergleichsweise großes Spektrum an Zubereitungsmethoden abgedeckt werden. Im Steinobstendokarp allenfalls enthaltene Blausäure wird durch einen vorgelagerten Prozess aus den Steinobstkernen entfernt.

Als Extrakt ist ein sprühgetrocknete Zichorienextraktpulver ohne nachgelagerte Instantisierung vorgesehen. Insbesondere haben sich bei Tests folgende Zusammensetzung als zufriedenstellend erwiesen:
- Standardersatzgetränk: 5,5g Extrakt-Pulver + 7g Endokarp-Pulver = 12,5g Mischung für 200ml Kaffee
- Espressoersatzgetränk: 1,25g Extrakt-Pulver + 5,75g Endokarp-Pulver = 7g Mischung für 25ml Kaffee

Diese Zusammensetzungen erlauben eine hinreichende Kompression im Siebträger und zugleich einen guten Druckaufbau. Zudem kann mit dem Steinobstendokarp als Füll- oder Trennstoff auf einfache Weise die im Brühkopf einer Kaffeemaschine, insbesondere im Brühkopf einer Siebträgermaschine, notwendige Mindestmenge bei Verwendung einer Kaffeemaschine erreicht werden, wobei der Füll- oder Trennstoff zugleich eine ungewollte Agglomeration des pulverförmigen Extrakts verhindert. Vorteilhafterweise wird mit den vorstehend genannten Zusammensetzungen auch eine Abrundung des Geschmacks erzielt. Es ergibt sich dabei eine Beschaffenheit des Kaffeeersatzgetränks, welche weitgehend jener von für den Einsatz in demselben Kaffeemaschinentypen gemahlenen Bohnen aus Kaffee entspricht, insbesondere hinsichtlich Koffeingehalt, Farbe und Körper. Vorteilhafterweise kann das Kaffeeersatzgetränk Schaum bzw. sogenannte "Crema" ausbilden. Vorzugsweise ist das Kaffeegetränk sedimentfrei. Vorzugsweise ist das Kaffeegetränk intensiv gefärbt, vorzugsweise Dunkelbraun, Mahagoni, Bernstein, Braun, Amber.

## Patentansprüche

1. Kaffeeersatzpulver, vorzugsweise auf Zichorienbasis, für die Herstellung von Kaffeeersatzgetränken in Kaffeemaschinen, zumindest aufweisend ein wasserlösliches, vorzugsweise geschmacksbildendes, Extrakt und einen im Wesentlichen geschmacksneutralen Füll- oder Trennstoff, **gekennzeichnet dadurch, dass** der Extrakt und der Füll- oder Trennstoff pulverförmig sind, wobei der Füll- oder Trennstoff vorzugsweise aus Steinobstendokarp besteht.

2. Kaffeeersatzpulver nach Anspruch 1, wobei der Füll- oder Trennstoff im Wesentlichen nicht-quellend ist.

3. Kaffeeersatzpulver nach Anspruch 1 oder 2, wobei der Füll- oder Trennstoff aus Marillenendokarp besteht.

4. Kaffeeersatzpulver nach einem der Ansprüche 1 bis 3, wobei das Kaffeeersatzpulver für die Herstellung von Kaffeeersatzgetränken in Druckbrühmaschinen, insbesondere Siebträgermaschinen, und Filtermaschinen, geeignet ist.

5. Kaffeeersatzpulver nach einem der Ansprüche 1 bis 4, wobei das Kaffeeersatzpulver durch die Vermengung von Extrakt und Füll- oder Trennstoff seine Maschinengängigkeit erreicht.

6. Kaffeeersatzpulver nach einem der Ansprüche 1 bis 5, wobei die Rezeptur des Kaffeeersatzpulvers für einen bestimmten Kaffeemaschinentypen durch das Mengenverhältnis von Extrakt und Füll- oder Trennstoff und/oder der Körnung des Füll- oder Trennstoffs adjustiert wird.

7. Kaffeeersatzpulver nach einem der Ansprüche 1 bis 6, wobei das Mengenverhältnis zwischen Extrakt und Füll- oder Trennstoff ein Teil Extrakt zu 1 - 100 Teilen Füll- oder Trennstoff, vorzugsweise 1:7 - 6:7, beträgt.

8. Kaffeeersatzpulver nach einem der Ansprüche 1 bis 7, wobei die Körnung des Füll- oder Trennstoffs 10-3000µm beträgt.

9. Kaffeeersatzpulver nach einem der Ansprüche 1 bis 8, wobei das Kaffeeersatzpulver außerdem zumindest Malzextrakt, Koffein und/oder Aromen aufweist.

10. Kaffeeersatzgetränk, das aus Kaffeeersatzpulver nach einem der Ansprüche 1 bis 9 hergestellt wird.

11. Verfahren zur Herstellung eines Kaffeeersatzgetränks nach Anspruch 10, wobei das Kaffeeersatzpulver analog zu gemahlenen Bohnen in eine Kaffeemaschine eingebracht und verwertet wird.
